# EUROPÄISCHE PATENTSCHRIFT

(11) **EP 2 016 783 B1**
(45) Veröffentlichungstag und Bekanntmachung des Hinweises auf die Patenterteilung: **02.09.2009**
(21) Anmeldenummer: 07724821.9
(22) Anmeldetag: 03.05.2007
(51) Int. Cl.: H04W 68/00

(54) **VERFAHREN ZUR REDUZIERUNG DER VERZÖGERUNGSZEIT DURCH EINE PAGING PROZEDUR BEI NETZINITIIERTER DATENÜBERTRAGUNG IN GPRS-MOBILFUNKNETZEN**
METHOD FOR REDUCING THE DELAY TIME BY A PAGING PROCEDURE IN NETWORK-INITIATED DATA TRANSMISSION IN GPRS-MOBILE COMMUNICATION NETWORKS
PROCÉDÉ POUR RÉDUIRE LE TEMPS DE RETARD AU MOYEN D'UNE PROCÉDURE DE SERVICE D'APPEL UNILATÉRAL (PAGING) LORS D'UNE TRANSMISSION DE DONNÉES LANCÉE PAR UN RÉSEAU DANS DES RÉSEAUX DE RADIOCOMMUNICATION MOBILE GPRS

(30) Priorität: 05.05.2006 DE 102006021342
(43) Veröffentlichungstag der Anmeldung: 21.01.2009
(73) Patentinhaber: T-Mobile International AG, 53227 Bonn (DE)
(72) Erfinder: SCHMITT, Harald, 56170 Bendorf (DE)
(74) Vertreter: Riebling, Peter
(86) Internationale Anmeldenummer: PCT/EP2007/003895
(87) Internationale Veröffentlichungsnummer: WO 2007/128486

(56) Entgegenhaltungen:
- WO-A1-99/52306
- US-A1- 2003 185 161
- US-B1- 6 434 396
- US-B1- 6 584 314
- "Digital cellular telecommunications system (Phase 2+); Universal Mobile Telecommunications System (UMTS); General Packet Radio Service (GPRS); Service description; Stage 2 (3GPP TS 23.060 version 6.12.0 Release 6)" ETSI STANDARDS, EUROPEAN TELECOMMUNICATIONS STANDARDS INSTITUTE, SOPHIA-ANTIPOLIS, FR, Bd. 3-SA2, Nr. V6.12.0, März 2006 (2006-03), XP014034198 ISSN: 0000-0001

## Beschreibung

Die Erfindung betrifft ein Verfahren zur Reduzierung der einleitenden Verzögerungszeit bei Netz initiierten Datenübertragungen in Mobilfunknetzen, insbesondere in paketvermittelten Mobilfunknetzen.

Ein Endgerät in paketvermittelten Mobilfunknetzen (GPRS, UMTS und andere) kann sich in verschiedenen Mobilitätszuständen befinden. Die Mobilitätszustände lassen sich verallgemeinern in aktive Zustände, in denen der Aufenthaltsort des Endgerätes im Netz bekannt ist und inaktive oder standby Zustände, bei denen der exakte Aufenthaltsort des Endgerätes im Netz ungekannt ist. Befindet sich ein Endgerät in aktiven Zuständen so können Daten ohne vorhergehende Prozeduren zwischen Netz und Endgerät ausgetauscht werden. In diesen Mobilitätszuständen sind Übertragungsressourcen zwischen Netz und Endgerät zugewiesen. In inaktiven oder standby Zuständen sind keine Übertragungsressourcen zugewiesen, so dass vor einer Datenübertragung zwischen Netz und Endgerät Prozeduren auszuführen sind, welche den Aufenthaltsort des Endgerätes im Netz aktualisieren und anschließend Übertragungsressourcen zuweisen. Aufgrund der Prozeduren zur Aktualisierung des Aufenthaltsortes und zur Zuweisung von Übertragungsressourcen ergibt sich eine einleitende Verzögerung (Delay) bis Daten übertragen werden können.

In der technischen Spezifikation ETSI TS 123 060 V6.12.0, Digital Cellular Telecommunications System (Phase 2+); Universal Mobile Telecommunications System (UMTS); General Packet Radio Service (GPRS); (3GPP TS 23.060 Version 6.12.0 (Release 6) sind die oben beschriebenen Prozeduren zur Netz initiierten Datenübertragungen in Mobilfunknetzen offenbart, wobei von einem anfordernden Netzknoten eine Datenübertragung zu einem sich in einem Bereitschaftszustand befindlichen Mobilfunkendgerät initiiert wird, indem eine Paginganforderungsnachricht, Paging Request, zu einem Basisstations-Subsystem übermittelt wird.

US 2003/0185161 A1 offenbart ein Verfahren für drahtlose Datenübertragung in beispielsweise einem UMTS Kommunikationssystem, bei dem zur Reduzierung der einleitenden Verzögerungszeit der Netzknoten ein erstes zu übertragendes Datenpaket bereits zusammen mit der Paginganforderungsnachricht zu dem Basisstations-Subsystem übermittelt. Ein ähnliches Verfahren ist in US 6 434 396 B1 beschrieben.

Der vorliegenden Erfindung liegt daher die Aufgabe zugrunde, die einleitende Verzögerung bis Daten im Downlink übertragen werden für Endgeräte in standby Zuständen zu reduzieren und die Nutzung der vorhandenen Übertragungsressourcen zu verbessern.

Diese Aufgabe wird erfindungsgemäß durch ein Verfahren gemäß dem unabhängigen Anspruch 1 gelöst, auf dessen Merkmale hier Bezug genommen wird.

Bevorzugte Ausgestaltungen und vorteilhafte Merkmale der Erfindung ergeben sich aus den abhängigen Ansprüchen, auf deren Merkmale hier Bezug genommen wird.

Es wird ein Verfahren zur Reduzierung der einleitenden Verzögerungszeit bei Netz initiierten Datenübertragungen in Mobilfunknetzen vorgeschlagen, wobei von einem anfordernden Netzknoten eine Datenübertragung zu einem sich in einem Bereitschaftszustand oder Ruhezustand befindlichen Mobilfunkendgerät initiiert wird. Erfindungsgemäß wird vom anfordernden Netzknoten ein erstes zu übertragendes Datenpaket bereits zusammen mit einer Paginganforderungsnachricht (Paging Request) zu einem Basisstations-. Subsystem übermittelt.

In einer bevorzugten Ausgestaltung der Erfindung ist vorgesehen, dass das Basisstations-Subsystem das erste Datenpaket sofort zum Mobilfunkendgerät sendet, sobald sich das Mobilfunkendgerät als Antwort auf die Paginganforderungsnachricht beim Basisstations-Subsystem gemeldet hat.

In einer weiteren Ausgestaltung der Erfindung wird die Rückmeldung des Mobilfunkendgeräts vom Basisstations-Subsystem an den anfordernden Netzknoten übermittelt, so dass nachfolgende Datenpakete an den richtigen Aufenthaltsort des Mobilfunkendgeräts übertragen werden können.

Das erfindungsgemäße Verfahren kann als Computerprogramm implementiert werden, welches in einem Basisstations-Subsystem ausgeführt wird.
Eine Anordnung zur Durchführung des Verfahrens kann mindestens eine Recheneinheit (CPU) und einen Speicher umfassen.

Die nachfolgende Beschreibung bezieht sich auf GPRS Mobilfunknetze, jedoch ist der Verbesserungsvorschlag auf andere Mobilfunknetze wie UMTS, CDMA und andere übertragbar.
- Figur 1: zeigt eine vereinfachte GPRS Netzarchitektur
- Figur 2: zeigt mögliche GPRS Mobilitätszustände (mobility states) eines Mobilfunkendgeräts (gemäß 3GPP 03.60).
- Figur 3: zeigt den Signalisierungsablauf bei einer GPRS Paging Prozedur
- Figur 4: zeigt den Signalisierungsablauf bei einer optimierten GPRS Paging Prozedur gemäß der Erfindung.

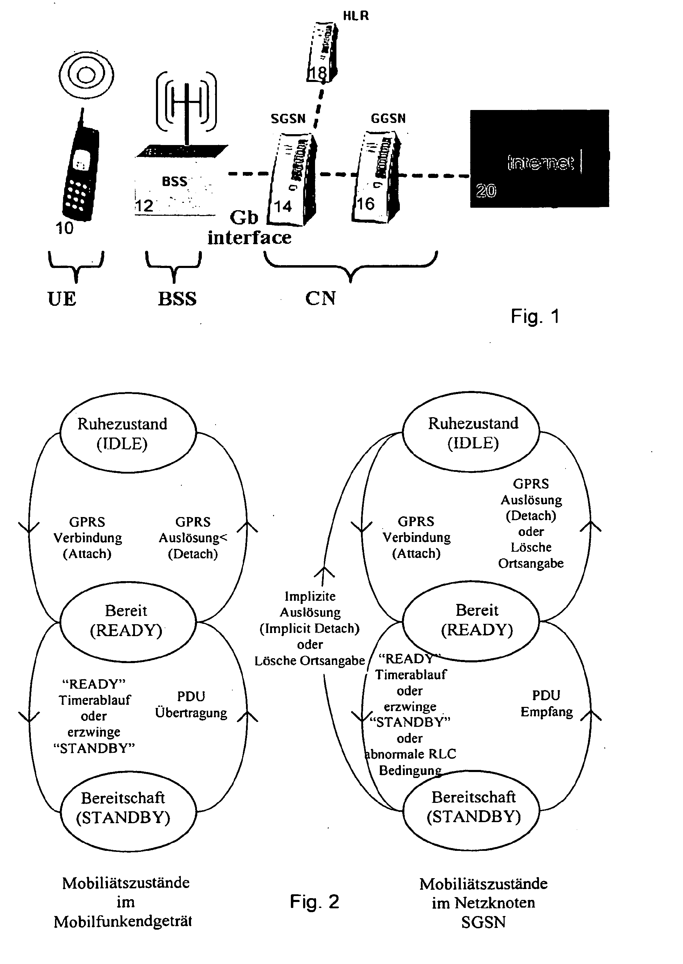

In Figur 1 ist eine vereinfachte Netzarchitektur eines GPRS-Mobilfunknetzes dargestellt. Ein Mobilfunkendgerät 10 (UE) kann über eine Luftschnittstelle mit einem Basisstations-Subsystem 12 (BSS) eines (GPRS-)Mobilfunknetzes kommunizieren. Das Basisstations-Subsystem umfasst Sende-Empfangseinrichtungen und Basisstationssteuerungseinrichtungen und ist über Netzknoten, SGSN: Serving GPRS Support Node 14, und GGSN: Gateway GPRS Support Node 16, mit anderen Netzknoten, z.B. dem Heimatregister HLR 18, Vermittlungseinrichtungen, und anderen Netzwerken, beispielsweise dem Internet 20, verbunden.

In Figur 2 sind mögliche GPRS Mobilitätszustände (mobility states) eines Mobilfunkendgeräts dargestellt (3GPP 03.60). Im Bereit-Zustand (Ready State) ist der Aufenthaltsort (Funkzelle) des Endgerätes im SGSN bekannt und somit kann der SGSN ankommende Daten im Downlink (also vom Netz zum Endgerät) direkt an das entsprechende Endgerät senden. Im Bereitschaftszustand (standby state) und Ruhezustand (Idle state) des Endgeräts ist dies nicht der Fall. Befindet sich ein Endgerät im Bereitschaftszustand (Standby State) kann der SGSN ankommende Daten im Downlink nicht direkt zum Endgerät senden, sondern muss zuerst den Aufenthaltsort (Sendestation in deren Versorgungsgebiet sich das Endgerät momentan aufhält) des Endgerätes bestimmen. Dies wird über eine sogenannte Paging Prozedur erreicht. Während der Paging Prozedur sendet das Mobilfunknetz in einem Routing-Bereich (Routing Area (siehe Spezifikation 3GPP 43.064)) die Kennung des Endgerätes aus. Erkennt das Endgerät seine eigene Kennung antwortet das Endgerät mit einer entsprechenden Nachricht und der Aufenthaltsort des Endgerätes ist anschließend im SGSN bekannt. Danach ist es dem SGSN möglich Daten zum Endgerät zu senden.

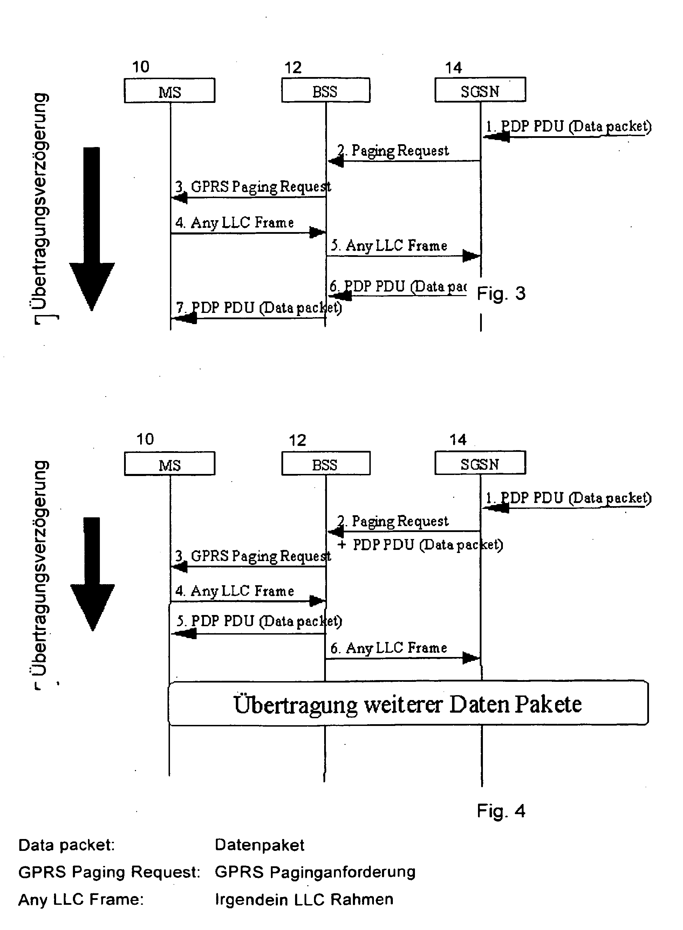

### Die GPRS Paging Prozedur ist in Figur 3 dargestellt:

Ein erstes an das Mobilfunkendgerät (MS) 10 zu sendendes Datenpaket (PDP PDU) trifft beim zuständigen SGSN 14 ein (Schritt 1). Der Aufenthaltsort des Mobilfunkendgeräts 10 ist dem Netz nicht (genau) bekannt, da es sich beispielsweise im Bereitschaftszustand oder Ruhezustand befindet. Der SGSN 14 übermittelt eine sogenannte Paging Request Nachricht (Paginganforderung) an das BSS 12 (Schritt 2). Das 12 BSS sendet die Paging Request Nachricht aus, die vom Mobilfunkendgerät 10 empfangen wird (Schritt 3). Das Mobilfunkendgerät 10 antwortet mit einer Nachricht (Any LLC Frame) an das BSS (Schritt 4). Diese Nachricht wird vom BSS 12 an den SGSN 14 weitergeleitet, der daraus den Standort des Mobilfunkendgeräts 10 ableiten kann (Schritt 5). Nun kann der SGSN 14 das erste Datenpaket (PDP PDU) an das BSS 12 übermitteln (Schritt 6), welches das Datenpaket (PDP PDU) an das Mobilfunkendgerät 10 weiterleitet (Schritt 7).
Aufgrund der GPRS Paging Prozedur ergibt sich eine initiale Verzögerungszeit (Transfer Delay) bei der Übertragung eines Datenpakets (PDP PDU) in Downlink Richtung. Diese Verzögerungszeit kann durch Optimierung der Paging Prozedur reduziert werden.
Ziel des erfindungsgemäßen Verfahrens ist es, die Zeit einzusparen, welche insbesondere durch die Schritte 5. und 6. der Paging Prozedur (siehe Figur 3) hervorgerufen wird.

In Figur 4 ist die optimierte Paging Prozedur dargestellt. Erfindungsgemäß wird vom SGSN 14 das erste zu sendende Datenpaket (PDP PDU) zusammen mit der Paging Request Nachricht zum BSS 12 gesendet (Schritt 2). Also zu einem Zeitpunkt zu dem der Aufenthaltsort des Mobilfunkendgerätes 10 noch nicht bekannt ist. Meldet sich in diesem Fall das Mobilfunkendgerät 10 als Antwort auf die Paging Prozedur im BSS 12 (Schritte 3 und 4), so kann das BSS 12 sofort das erste Datenpaket (PDP PDU) zum Mobilfunkendgerät senden (Schritt 5). Der Schritt 7 (Übermittlung "Any LLC Frame" Nachricht vom BSS zum SGSN) in der Paging Prozedur ist jedoch weiterhin notwendig um nachfolgende Datenpakete an den richtigen Aufenthaltsort zu übertragen.

Durch die beschriebene Optimierung der GPRS Paging Prozedur wird zum einen die Transferzeit der Nachrichten "Any LLC frame" und des ersten Datenpaketes (PDP PDU) auf dem BSS-SGSN Interface eingespart. Zum anderen wird die Verarbeitungszeit des SGSNs dieser beiden Nachrichten eingespart.

Ein weiterer Vorteil der optimierten Paging Prozedur besteht darin, dass das BSS 12 vor der Zuweisung von Übertragungsressourcen das erste zu übertragende Datenpaket (PDP PDU) erhält. Dadurch hat das BSS 12 eine Indikation über die zu übertragende Datenmenge und kann diese Indikation bereits bei der ersten Zuweisung von Übertragungsressourcen berücksichtigen. Bei großen Datenpaketen weist das BSS 12 mehr Übertragungsressourcen zu als bei kleinen Datenpaketen. Ohne die optimierte Paging Prozedur kann die erste Zuweisung von Übertragungsressourcen nur eine Abschätzung und nicht optimal sein, da die Größe des Datenvolumens unbekannt ist. Somit ist eine nachträgliche Änderung der Übertragungsressourcen nötig im Fall geringer zugewiesener Übertragungsressourcen. Dies führt zu Verzögerungen in der Übertragungszeit. Im Fall, dass die zugewiesenen Ressourcen durch die Datenmenge nicht voll ausgenutzt werden findet eine Verschwendung von Übertragungsressourcen statt.
- 10: Mobilfunkendgerät
- 12: Basisstations-Subsystem
- 14: SGSN
- 16: GGSN
- 18: HLR
- 20: Internet

## Patentansprüche

1. Verfahren zur netzinitiierten Datenübertragung in Mobilfunknetzen, wobei von einem anfordernden Netzknoten (14) eine Datenübertragung zu einem sich in einem Bereitschaftszustand befindlichen Mobilfunkendgerät (10) initiiert wird, wobei vom anfordernden Netzknoten (14) eine Paginganforderungsnachricht, Paging Request, zu einem Basisstations-Subsystem (12) übermittelt wird, **dadurch gekennzeichnet,**
**dass** zur Reduzierung der einleitenden Verzögerungszeit der Netzknoten (14) ein erstes zu übertragendes Datenpaket bereits zusammen mit der Paginganforderungsnachricht zu dem Basisstations-Subsystem (12) übermittelt, wobei das Basisstations-Subsystem (12) das erste zu übertragende Datenpaket, PDP-PDU, vor einer Zuweisung von Übertragungsressourcen auf der Funkschnittstelle erhält, wodurch das Basisstations-Subsystem (12) eine Indikation über die zu übertragende Datenmenge erhält und diese Indikation bei der ersten Zuweisung der Ubertragungsressourcenberücksichtigt.

2. Verfahren nach Anspruch 1, **dadurch gekennzeichnet, dass** das Basisstations-Subsystem (12) das erste Datenpaket sofort zum Mobilfunkendgerät (10) sendet, sobald sich das Mobilfunkendgerät (10) als Antwort auf die Paginganforderungsnachricht beim Basisstations-Subsystem (12) gemeldet hat.

3. Verfahren nach Anspruch 1 oder 2, **dadurch gekennzeichnet, dass** die Rückmeldung des Mobilfunkendgeräts (10) auf den Empfang der Paginganforderungsnachricht vom Basisstations-Subsystem (12) an den anfordernden Netzknoten (14) übermittelt wird, so dass nachfolgende Datenpakete an den richtigen Aufenthaltsort des Mobilfunkendgeräts übertragen werden.

4. Verfahren nach einem der Ansprüche 1 bis 3, **dadurch gekennzeichnet, dass** das Basisstations-Subsystem (12) bei einer großen Datenmenge mehr Übertragungsressourcen zuweist als bei einer kleinen Datenmenge.

5. Computerprogramm mit Programminstruktionen, welches in einem anfordernden Netzknoten (14) oder einem Basisstations-Subsystem (12) ausgeführt wird, zur Durchführung der Schritte des Verfahrens nach einem der Ansprüche 1 bis 4.

6. Anordnung mit mindestens einer Recheneinheit, CPU, und einem Speicher, wobei die Anordnung Mittel zur Durchführung der Schritte des Verfahrens nach einem der Ansprüche 1 bis 4 aufweist.

## Claims

1. Method for network-initiated data transmission in mobile communications networks, wherein data transmission to a mobile communications terminal device (10) in a state of readiness is initiated by a requesting network node (14), wherein from the requesting network node (14) a paging request message, paging request, is transmitted to a base station subsystem (12), **characterised in that** for reducing the initiating delay time the network node (14) sends a first data packet to be transmitted together already with the paging request message to the base station subsystem (12), wherein the base station subsystem (12) receives the first data packet to be transmitted, PDP-PDU, prior to an allocation of transmission resources on the radio interface as a result of which the base station subsystem (12) receives an indication about the data volume to be transmitted and takes this indication into account in the first allocation of the transmission resources.

2. Method according to claim 1, **characterised in that** the base station subsystem (12) immediately sends the first data packet to the mobile communications terminal device (10) as soon as the mobile communications terminal device (10) has registered at the base station subsystem (12) in response to the paging request message.

3. Method according to claim 1 or 2, **characterised in that** the acknowledgement of the mobile communications terminal device (10) to receipt of the paging request message is sent by the base station subsystem (12) to the requesting network node (14) so that subsequent data packets are transmitted to the correct location of the mobile communications terminal device.

4. Method according to any of claims 1 to 3, **characterised in that** in the event of a large data volume the base station subsystem (12) allocates more transmission resources than in the case of a small data volume.

5. Computer program having program instructions which is executed in a requesting network node (14) or a base station subsystem (12) for carrying out the steps of the method according to any of claims 1 to 4.

6. Arrangement having at least one computing unit, CPU, and a memory, wherein the arrangement comprises means for carrying out the steps of the method according to any of claims 1 to 4.

## Revendications

1. Procédé pour la transmission de données lancée par le réseau dans des réseaux de téléphonie mobile, selon lequel un noeud de réseau demandeur (14) lance une transmission de données vers un terminal mobile qui se trouve dans une position d'attente, le noeud de réseau demandeur (14) transmettant un message de demande de radiomessagerie, Paging Request, à un sous-système de station de base (12),
**caractérisé en ce que** pour réduire le temps de retard d'introduction le noeud de réseau (14) transmet déjà avec le message de demande de radiomessagerie adressé au sous-système de station de base (12) un premier paquet de données à transmettre, le sous-système de station de base (12) recevant sur l'interface radio le premier paquet de données à transmettre, PDP-PDU, avant une attribution de ressources de transmission, moyennant quoi le sous-système de station de base (12) reçoit une indication sur la quantité de données à transmettre et tient compte de cette indication lors de la première attribution des ressources de transmission.

2. Procédé selon la revendication 1, **caractérisé en ce que** le sous-système de station de base (12) envoie le premier paquet de données au terminal mobile (10) dès que celui-ci s'est signalé sous la forme de réponse au message de demande de radiomessagerie auprès du sous-système de station de base (12).

3. Procédé selon la revendication 1 ou 2,
**caractérisé en ce que** l'accusé de réception du terminal mobile (12) faisant suite à la réception du message de demande de radiomessagerie est transmis par le sous-système de station de base (12) au noeud de réseau demandeur (14), de sorte que les paquets de données suivants sont transmis à la bonne position du terminal mobile.

4. Procédé selon l'une des revendications 1 à 3, **caractérisé en ce que** le sous-système de station de base (12), en cas de grande quantité de données, attribue plus de ressources de transmission qu'en cas de petite quantité de données.

5. Programme informatique avec des instructions de programme, qui est exécuté dans un noeud de réseau demandeur (14) ou dans un sous-système de station de base (12), pour la mise en oeuvre des étapes du procédé selon l'une des revendications 1 à 4.

6. Disposition avec au moins une unité de traitement, CPU, et une mémoire, ce dispositif comportant des moyens pour mettre en oeuvre les étapes du procédé selon l'une des revendications 1 à 4.
